# EUROPÄISCHE PATENTSCHRIFT

(11) **EP 2 379 327 B1**
(45) Veröffentlichungstag und Bekanntmachung des Hinweises auf die Patenterteilung: **08.11.2017**
(21) Anmeldenummer: 09763973.6
(22) Anmeldetag: 04.12.2009
(51) Int. Cl.: B32B 27/40, C09K 5/00, E04C 2/284

(54) **FLÄCHENFÖRMIGES BAUELEMENT AUS VERBUNDMATERIAL**
LAMINAR COMPONENT MADE FROM COMPOSITE MATERIAL
ÉLÉMENT DE CONSTRUCTION DE FORME PLATE FAIT D'UN MATÉRIAU COMPOSITE

(30) Priorität: 17.12.2008 EP 08171938
(43) Veröffentlichungstag der Anmeldung: 26.10.2011
(73) Patentinhaber: BASF Coatings GmbH, 48165 Münster (DE)
(72) Erfinder: SCHMIDT, Marco, 67346 Speyer (DE); BALBO BLOCK, Marco, 49074 Osnabrück (DE); SCHMIDT, Volker, 49448 Lemförde (DE); HEIMES-SCHELLER, Annerose, 48308 Senden (DE); JANDEL, Lothar, 48165 Münster (DE)
(74) Vertreter: BASF IP Association
(86) Internationale Anmeldenummer: PCT/EP2009/066386
(87) Internationale Veröffentlichungsnummer: WO 2010/076118

(56) Entgegenhaltungen:
- DE-A1-102004 041 298
- US-A- 6 000 438
- US-A1- 2001 048 984
- US-A1- 2005 055 982

## Beschreibung

Die vorliegende Anmeldung betrifft ein flächenförmiges Bauelement aus Verbundmaterial umfassend zwei metallische Deckschichten und eine Polyurethanhartschaumschicht.

Flächenförmige Bauelemente umfassend zwei metallische Deckschichten und eine Polyurethanhartschaumschicht, sogenannte Sandwichelemente, werden sowohl als Bauelemente im Wohnungsbau wie auch im Industriebau für Hallendächer und Fassaden, als Konstruktionselemente im Kühlhausbau, in Sektionaltoren, in Bürocontainern oder im Wohnwagenbau eingesetzt. Aufgrund ihrer sehr guten Dämmeigenschaften sind sie dort weit verbreitet. Ihre geringe Masse bewirkt jedoch, dass die Gebäude Temperaturspitzen kaum abpuffern können. Durch innere und äußere Temperaturbelastungen erwärmen sich solche Gebäude im Inneren sehr schnell. Diese negative Eigenschaft wird unter dem Begriff "Barackenklima" zusammengefasst.

Die Masse eines Bauwerkes speichert im Sommer die einströmende Wärme bei Tag und hält dadurch im Idealfall die Innentemperatur konstant. In der kühleren Nacht wird die gespeicherte Wärme wieder an die Außenluft abgegeben. Um ein angenehmes Raumklima auch im Sommer ohne aktive Klimatisierung zu erreichen, ist also thermische Masse des Gebäudes unerlässlich. Eine solche große thermische Masse fehlt jedoch Gebäuden mit Sandwichelementen.

In den letzten Jahren wurden als neue Materialkombination in Baustoffen Latentwärmespeichermaterialien - auch als Phase-Change-Materials (kurz PCM) bezeichnet - untersucht. Ihre Funktionsweise beruht auf der beim fest/flüssig- Phasenübergang auftretenden Umwandlungsenthalpie, die eine Energieaufnahme oder Energieabgabe an die Umgebung bei konstanter Temperatur bedeutet. Sie können damit zur Temperaturkonstanthaltung in einem festgelegten Temperaturbereich verwendet werden. Da die Latentwärmespeichermaterialien je nach Temperatur auch flüssig vorliegen, können sie nicht direkt mit Baustoffen verarbeitet werden, denn Emissionen an die Raumluft oder die Trennung vom Baustoff wären zu befürchten.

Die EP-A-1 703 033 lehrt Bauelemente für den Innenausbau mit zwei Metalldeckschichten wobei die Zwischenschicht ein Latentwärmespeichermaterial enthält.

Die WO 2006/021306 lehrt ein Verbundmaterial mit einer Metalldeckschicht, einer Gipsbauplatte und einer diese beiden Platten verbindenden Polyurethanhartschaumstoffschicht. Die Gipsbauplatte enthält Mikrokapseln mit einem Kapselkern aus Latentwärmespeichermaterial. Bauelemente mit Gipskartonplatten haben jedoch eine auf 2 bis 3 Meter begrenzte Spannweite, was ihre Einsatzmöglichkeiten begrenzt. So ist beispielsweise der Einsatz in größere Flächen überspannenden Dachkonstruktionen nicht möglich. Aufgabe der vorliegenden Erfindung war es, Bauelemente zur Verfügung zu stellen, die eine verbesserte mechanische Stabilität insbesondere eine verbesserte Spannweite aufweisen.

Eine weitere Aufgabe war, ein verbessertes Herstellverfahren für solche Bauelemente zu finden, das es ermöglicht, sie auch endlos zu produzieren.

Aufgabe der vorliegenden Erfindung war es, flächenförmige Bauelemente aus einem Verbundmaterial mit zwei Metalldeckschichten derart zu verbessern, dass die aus ihnen hergestellten Gebäude ein besseres Klima aufweisen.

Diese Aufgabe wird gelöst durch ein flächenförmiges Bauelement aus Verbundmaterial, umfassend zwei metallische Deckschichten, eine Polyurethanhartschaumschicht und eine Polyurethankompaktschicht, die Mikrokapseln mit einem Kapselkern aus Latentwärmespeichermaterial enthält. Erfindungsgemäß enthält die Polyurethankompaktschicht Mikrokapseln mit einem Kapselkern aus Latentwärmespeichermaterial.

Unter flächenförmigem Bauelement ist im Rahmen dieser Anmeldung ein Gebilde zu verstehen, dessen Dicke klein gegenüber sowohl seiner Länge wie auch seiner Breite ist. Bevorzugt ist dessen Dicke ≤1/5 seiner Länge wie auch seiner Breite.

Die flächenförmigen Bauelemente können dabei eine Topologie aufweisen, die beispielsweise durch Formgebungsverfahren erzeugt wird.

Gemäß einer Ausführungsform weist das flächenförmige Bauelement eine Polyurethankompaktschicht auf. Vom Rauminneren aus gesehen ergibt sich die folgende Reihenfolge der Schichten:
1. metallische Deckschicht (A),
2. Polyurethankompaktschicht (B),
3. Polyurethanhartschaumschicht (C) und
4. eine metallische Deckschicht (A').

Gemäß einer weiteren Ausführungsform weist das flächenförmige Bauelement eine zweite Polyurethankompaktschicht auf. Vom Rauminneren aus gesehen ergibt sich die folgende Reihenfolge der Schichten:
1. metallische Deckschicht (A),
2. Polyurethankompaktschicht (B),
3. Polyurethanhartschaumschicht (C)
4. Polyurethankompaktschicht (B) und
5. eine metallische Deckschicht (A).

Bei Sandwichelementen mit dem Aufbau A-B-C-A' befindet sich die metallische Deckschicht A' in der Regel im Freien. Ferner sind auch Innenraumanwendungen denkbar wie Deckenplatten, Wandelemente und Raum-im-Raum Systeme. Für Anwendungen wie Raum-im-Raum Systeme oder innenliegende Trennwände sind flächenförmige Bauelemente mit dem Aufbau A-B-C-B-A bevorzugt.

### Die metallische Deckschicht

Die beiden metallischen Deckschichten können dabei unterschiedlich sein. Man unterscheidet dann die Begrenzung zum Rauminneren (A) und die außen liegende Deckschicht (A'). Die beiden Schichten müssen weder in ihrer Form noch in ihrem Material übereinstimmen. Flächenförmige Bauelemente mit dem Aufbau A-B-C-B-A haben dagegen bevorzugt gleiche metallischen Deckschichten.

Als Deckschichten können flexible oder starre, bevorzugt starre Deckschichten verwendet werden. Die Deckschicht muss nicht zwingend profiliert sein, kann auch in glatter Form oder als gestanztes, konturiertes oder geformtes Blech (z.B. Pfannenoptik) eingesetzt werden.

Die metallische Deckschicht kann im metallischen Zustand oder im beschichteten Zustand vorliegen. Bevorzugte Metalle sind Aluminium, Stahl, verzinkter oder aluminierter Stahl, Kupfer, Zink, andere Metallbänder oder Metalltafeln. Bevorzugt seien Aluminiumfolien, Aluminium-, Kupfer- oder Stahlbleche, besonders bevorzugt Stahlbleche genannt.

Die metallischen Deckschichten können vorbehandelt werden, beispielsweise mit Corona-, Lichtbogen-, Plasmabehandlung oder anderen üblichen Methoden.
Die metallische Deckschicht, bevorzugt die äußere metallische Deckschicht (A'), kann mit den üblichen, für derartige Bauelemente eingesetzten Materialien modifiziert sein, um die Wetterfestigkeit zu erhöhen.

Häufig sind die metallischen Deckschichten auch mit organischen Beschichtungen versehen. Diese organischen Schichten können eine Dicke von 0,5 µm bis 500 µm aufweisen. Ein wichtiges Beschichtungsverfahren ist die Bandbeschichtung, die auch Coil Coating genannt wird. In diesem Veredelungsverfahren werden die Metallbänder, sehr häufig verzinkte Stahl- und Aluminiumbänder, bis zu einer Breite von 2070 mm, mit einem Lack oder Kunststofffilm beschichtet, wieder aufgewickelt und anschließend bei dem Verarbeiter z.B. zu Sandwichelementen verarbeitet. Das Coil Coating Verfahren ist dem Fachmann bekannt und wird beispielsweise in Kittel - Lehrbuch der Lacke und Beschichtungen, Band 6 "Anwendung von Lacken und sonstigen Beschichtungen", 2. Auflage, S. Hirzel Verlag, Stuttgart, 2008 beschrieben. Die auf das Metallband aufgetragenen organischen Beschichtungen können einschichtig oder mehrschichtig mit bis zu 6 Schichten auf der Oberseite aufgetragen sein. Auf der Unterseite, die bei der weiteren Verarbeitung mit der Polyurethanhartschaumschicht in Berührung kommt, sind in der Regel eine oder zwei organische Schichten aufgebracht.

Die organischen Beschichtungen können aufgebaut sein mit Harzen auf Basis von E-poxy, Polyester, Polyurethan, Acrylat, Polyvinylchlorid (mit Weichmachern oder Estern) und Polyvinylidenfluorid. Typische Vernetzer basieren auf Aminoharzen und / oder Isocyanat. Die organischen Beschichtungen haben weiterhin Bestandteile wie Pigmente, Katalysatoren, Additive.

### Die Polyurethankompaktschicht

Unter Polyurethankompaktschicht ist eine Polymerschicht zu verstehen mit einer Dichte von 400 bis 1200, bevorzugt von 500 bis 1000, besonders bevorzugt von 600 bis 950 kg/m³.

Ihre Herstellung erfolgt üblicherweise durch Umsetzung von organischen Di- und/oder Polyisocyanaten a) mit Verbindungen mit mindestens zwei mit Isocyanatgruppen reaktiven Wasserstoffatomen b), bevorzugt Polyolen. Sofern es sich um die noch nicht vernetzte Mischung der Komponenten handelt, wird nachfolgend von einem reaktiven Polyurethankompaktsystem gesprochen.

Das Umsetzungsverhältnis wird vorzugsweise so gewählt, dass im Reaktionsgemisch das Verhältnis von Anzahl an Isocyanatgruppen zur Anzahl an gegenüber Isocyanaten reaktiven Wasserstoffatomen 0,8 bis 1,8 zu 1, bevorzugt 1 bis 1,6 zu 1 beträgt.

Als organische Di- und Polyisocyanate a) kommen aliphatische, cycloaliphatische und vorzugsweise aromatische mehrwertige Isocyanate in Betracht. Im einzelnen seien beispielhaft genannt 2,4- und 2,6- Toluylen- diisocyanat (TDI) und die entsprechenden Isomerengemische, 4,4'- , 2,4'- und 2,2'- Diphenylmethan- diisocyanat (MDI) und die entsprechenden Isomerengemische, Mischungen aus 4,4'- und 2,4'- Diphenylmethandiisocyanaten, Polyphenyl- polymethylen- polyisocyanate, Mischungen aus 4,4'- , 2,4'-und 2,2'- Diphenylmethan- diisocyanaten und Polyphenyl-polymethylen- polyisocyanaten (Roh- MDI) und Mischungen aus Roh- MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Carbodiimid-, Allophanat-, Isocyanurat- und/oder Urethangruppen enthaltende Di- und/oder Polyisocyanate. Die modifizierten organischen Di- und Polyisocyanate können gegebenenfalls miteinander oder mit unmodifizierten organischen Di- und Polyisocyanaten wie z.B. 2,4'-, 4,4'- Diphenylmethan- diisocyanat, Roh- MDI, 2,4- und/oder 2,6- Toluylen- diisocyanat gemischt werden.

Daneben können auch Umsetzungsprodukte von mehrwertigen Isocyanaten mit mehrwertigen Polyolen, sogenannte Prepolymere, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 100 bis 2000 mPa.s, insbesondere im Bereich 100 bis 800 mPa.s.

Als Verbindungen mit mindestens zwei gegenüber Isocyanat reaktiven Wasserstoffatomen b) kommen im allgemeinen solche in Frage, die mindestens zwei reaktive Gruppen, ausgewählt aus OH-, SH-, NH-, NH₂-Gruppen und CH-aciden Gruppen im Molekül tragen, insbesondere Polyetherpolyole und Polyesterpolyole.

Die Polyesterpolyole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, wie Ethylenglycol, Diethylenglycol, Butandiol, Trimethylolpropan, Glycerin, Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure, den Isomeren von Naphthalindicarbonsäuren oder den Anhydriden der Säuren, hergestellt.

Als weitere Ausgangsstoffe bei der Herstellung der Polyesterpolyole können auch hydrophobe Stoffe verwendet werden. Bei den hydrophoben Stoffen handelt es sich um wasserunlösliche Stoffe, die einen unpolaren organischen Rest enthalten sowie über mindestens eine reaktive Gruppe, ausgewählt aus Hydroxyl, Carbonsäure, Carbonsäureester oder Mischungen daraus, verfügen. Das Äquivalentgewicht der hydrophoben Materialien liegt vorzugsweise zwischen 130 und 1000 g/mol. Verwendet werden können zum Beispiel Fettsäuren, wie Stearinsäure, Ölsäure, Palmitinsäure, Laurinsäure oder Linolsäure, sowie Fette und Öle, wie zum Beispiel Rizinusöl, Maisöl, Sonnenblumenöl, Sojabohnenöl, Kokosnussöl, Olivenöl oder Tallöl. Enthalten Polyesterpolyole hydrophobe Stoffe, beträgt der Anteil der hydrophoben Stoffe am Gesamtmonomergehalt des Polyesterpolyols vorzugsweise 1-30 Mol%, besonders bevorzugt 4 - 15 Mol%.

Die eingesetzten Polyesterpolyole haben zumeist eine Funktionalität von 1,5 - 4 sowie eine OH-Zahl von 50 - 400, vorzugsweise 150 - 300 mg KOH/g.

Die Polyetherpolyole werden nach bekannten Verfahren, beispielsweise durch anionische Polymerisation von Alkylenoxiden unter Zusatz von mindestens einem Startmolekül in Gegenwart von Katalysatoren, beispielsweise Alkalihydroxiden, hergestellt.

Als Alkylenoxide werden zumeist Ethylenoxid und/oder Propylenoxid, vorzugsweise reines 1,2- Propylenoxid eingesetzt.

Als Startmoleküle kommen insbesondere Verbindungen mit mindestens 2, vorzugsweise 2 bis 4 Hydroxylgruppen oder mit mindestens zwei primären Aminogruppen im Molekül zum Einsatz.

Als Startmoleküle mit mindestens 2, vorzugsweise 2 bis 8 Hydroxylgruppen im Molekül werden vorzugsweise Propylenglycol, Dipropylenglycol, Trimethylolpropan, Glycerin, Pentaerythrit, Zuckerverbindungen wie beispielsweise Glucose, Sorbit, Mannit und Saccharose, mehrwertige Phenole, Resole, wie oligomere Kondensationsprodukte aus Phenol und Formaldehyd und Mannich- Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6- Toluylendiamin und 4,4'- , 2,4'- und 2,2'- Diamino- diphenylmethan sowie aliphatische Di- und Polyamine, wie Ethylendiamin, eingesetzt.

Die Polyetherpolyole besitzen eine Funktionalität von 2 bis 4, vorzugsweise 2 bis 3, und Hydroxylzahlen von vorzugsweise 30 mg KOH/g bis 800 mg KOH/g und insbesondere 150 mg KOH/g bis 570 mg KOH/g.

Zu den Verbindungen mit mindestens zwei gegenüber Isocyanat reaktiven Wasserstoffatomen b) gehören auch die gegebenenfalls mitverwendeten Kettenverlängerungsmittel und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine, Diole und/oder Triole, insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 30 Gew.- %, vorzugsweise 2 bis 10 Gew.- %, bezogen auf die Komponente b), bevorzugt die Polyolkomponente, eingesetzt.

Weitere Angaben zu den verwendeten Polyetherpolyolen und Polyesterpolyolen sowie ihrer Herstellung finden sich beispielsweise im Kunststoffhandbuch, Band 7 "Polyurethane", herausgegeben von Günter Oertel, Carl- Hanser- Verlag München, 3. Auflage, 1993.

Die Herstellung der Polyurethankompaktschicht erfolgt üblicherweise in Anwesenheit von Katalysatoren sowie, falls erforderlich weiteren Hilfs- und/oder Zusatzstoffen, die allgemein in der Polyurethanchemie bekannt sind und in der DE-A-101 24 333 beschrieben werden, auf die ausdrücklich verwiesen wird. Als Hilfsmittel und/oder Zusatzstoffe kommen die für diesen Zweck an sich bekannten Stoffe, beispielsweise oberflächenaktive Substanzen, Füllstoffe, Pigmente, Farbstoffe, Flammschutzmittel, Hydrolyseschutzmittel, Antistatika, fungistatisch und bakteriostatisch wirkende Mittel zum Einsatz. Nähere Angaben über die zur Durchführung des erfindungsgemäßen Verfahrens eingesetzten Ausgangsstoffe, Katalysatoren sowie Hilfs- und/oder Zusatzstoffe finden sich beispielsweise im Kunststoffhandbuch, Band 7, "Polyurethane" Carl-Hanser- Verlag München, 1. Auflage, 1966, 2. Auflage, 1983 und 3. Auflage, 1993.

Als Katalysatoren können alle Verbindungen eingesetzt werden, die die Isocyanat-Wasser-Reaktion oder die Isocyanat-Polyol-Reaktion beschleunigen. Diese umfassen aminbasierte Katalysatoren und Katalysatoren auf Basis von organischen Metallverbindungen.

Als Katalysatoren auf Basis von organischen Metallverbindungen können beispielsweise organische Zinnverbindungen, wie Zinn-(II)-salze von organischen Carbonsäuren, wie Zinn-(II)-acetat, Zinn-(II)-octoat, Zinn-(II)-ethyl-hexoat und Zinn-(II)-laurat und die Dialkylzinn-(IV)-salze von organischen Carbonsäuren, wie Dibutyl-zinndiacetat, Dibutylzinndilaurat, Dibutylzinn-maleat und Dioctylzinn-diacetat, sowie Bismutcarboxylate wie Bismut(III)-neodecanoat, Bismut-2-ethylhexanoat und Bismut-octanoat oder Alkalisalze von Carbonsäuren, wie Kaliumacetat oder Kaliumformiat eingesetzt werden.

Vorzugsweise wird als Katalysator eine Mischung, enthaltend zumindest ein tertiäres Amin, eingesetzt. Bei diesen tertiären Aminen handelt es sich gewöhnlich um Verbindungen, die auch gegenüber Isocyanat reaktive Gruppen, wie OH-, NH- oder NH₂-Gruppen, tragen können. Einige der am häufigsten eingesetzten Katalysatoren sind Bis(2-Dimethyl-aminoethyl)ether, N,N,N,N,N-Pentamethyldiethylentriamin, N,N,N-Triethylamino-ethoxyethanol, Dimethylcyclohexylamin, Dimethylbenzylamin, Triethylamin, Triethylendiamin, Pentamethyldipropylentriamin, Dimethylethanolamin, N-Methylimidazol, N-Ethylimidazol, Tetramethylhexamethylendiamin, Tris-(Dimethylaminopropyl)hexahydrotriazin, Dimethylaminopropylamin, N-Ethylmorpholin, Diazabicycloundecen und Diazabicyclononen.

Geeignete Flammschutzmittel sind beispielsweise bromierte Ether (Ixol B 251), bromierte Alkohole, wie Dibromneopentylalkohol, Tribromneopentylalkohol und PHT-4-Diol. Bevorzugt werden Brom-freie Flammschutzmittel eingesetzt wie chlorierte Phosphate, wie z.B. Tris-(2-chlorethyl)phosphat, Tris-(2-chlorisopropyl)phosphat (TCPP), Tris(1,3-dichlorisopropyl)phosphat, und Tetrakis-(2-chlorethyl)-ethylendiphosphat, oder Mischungen daraus.

Außer den bereits genannten halogensubstituierten Phosphaten können auch anorganische Flammschutzmittel, wie roter Phosphor, roten Phosphor enthaltende Zurichtungen, expandierbarer Graphit (Blähgraphit), Aluminiumoxidhydrat, Antimontrioxid, Arsenoxid, Ammoniumpolyphosphat und Calciumsulfat oder Cyanursäurederivate, wie Melamin, oder Mischungen aus mindestens zwei Flammschutzmitteln, wie Ammoniumpolyphosphaten und Melamin sowie gegebenenfalls Stärke verwendet werden.

Als weitere flüssige halogenfreie Flammschutzmittel können Diethyl-ethanphosphonat (DEEP), Triethylphosphat (TEP), Dimethylpropylphosphonat (DMPP), Diphenylkresylphosphat (DPK) und andere verwendet werden.

Die Flammschutzmittel werden im Rahmen der vorliegenden Erfindung bevorzugt in einer Menge von 0 bis 25% bezogen auf das Gesamtgewicht der Komponenten des Polyurethankompaktsystems verwendet.

Die Di- und Polyisocyanate und die Verbindungen mit Isocyanaten reaktiven Wasserstoffatomen werden in solchen Mengen miteinander zur Umsetzung gebracht, dass der Isocyanatindex in einem Bereich zwischen 90 und 700 liegt, bevorzugt im Bereich von 100 bis 140.

Die Polyurethankompaktschicht wird ohne Zusatz von Treibmitteln hergestellt. Die verwendeten Polyole können jedoch noch Restwasser enthalten, welches als Treibmittel wirkt. Bevorzugt werden Polyole eingesetzt, deren Anteil an Restwasser < 1 Gew.-%, bevorzugt < 0,5 Gew.-%, insbesondere < 0,2 Gew.-% beträgt. Der Wasseranteil kann dabei durch "Trocknen" der Polyole durch Wasser-absorbierende Additive wie Molsieb (physikalisch wirkende Additive) oder Oxazolidine (chemisch wirkende Additive) gesenkt werden.

Gemäß einer weiteren Ausführungsform wird dem reaktiven Polyurethankompaktsystem zusätzlich ein Antischäummittel oder Wasser-absorbierende Additive zugesetzt.

### Die Mikrokapseln

Die erfindungsgemäß in der Polyurethankompaktschicht enthaltenen Mikrokapseln umfassen einen Kapselkern aus Latentwärmespeichermaterial und eine Kapselwand aus Polymer. Der Kapselkern besteht überwiegend, zu mehr als 95 Gew.-%, aus Latentwärmespeichermaterial. Der Kapselkern kann dabei, abhängig von der Temperatur, sowohl fest als auch flüssig sein.

Herstellungsbedingt wird in der Regel ein Schutzkolloid mit in die Kapselwand eingebaut und ist somit ebenfalls Bestandteil der Kapselwand. In der Regel weist insbesondere die Oberfläche des Polymers das Schutzkolloid auf. So können bis zu 10 Gew.-% bezogen auf das Gesamtgewicht der Mikrokapseln Schutzkolloid sein.

Die mittlere Teilchengröße der Kapseln (Z-Mittel mittels Lichtstreuung) beträgt 0,5 bis 50 µm, bevorzugt 0,5 bis 30 µm. Das Gewichtsverhältnis von Kapselkern zu Kapselwand beträgt im allgemeinen von 50:50 bis 95:5. Bevorzugt wird ein Kern/Wand-Verhältnis von 70:30 bis 93:7.

Latentwärmespeichermaterialien sind definitionsgemäß Substanzen, die in dem Temperaturbereich, in welchem eine Wärmeübertragung vorgenommen werden soll, einen Phasenübergang aufweisen, daher in der Literatur oftmals auch als PCM (Phase Change Material) bezeichnet. Vorzugsweise handelt es sich um eine organische lipophile Substanz, die ihren fest/flüssig Phasenübergang im Temperaturbereich von -20 bis 120°C aufweist.

### Beispielhaft seien genannt:

- aliphatische Kohlenwasserstoffverbindungen wie gesättigte oder ungesättigte C₁₀-C₄₀-Kohlenwasserstoffe, die verzweigt oder bevorzugt linear sind, z.B. wie n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan sowie cyclische Kohlenwasserstoffe, z.B. Cyclohexan, Cyclooctan, Cyclodecan;
- aromatische Kohlenwasserstoffverbindungen wie Benzol, Naphthalin, Biphenyl, o- oder m-Terphenyl, C₁-C₄₀-alkylsubstituierte aromatische Kohlenwasserstoffe wie Dodecylbenzol, Tetradecylbenzol, Hexadecylbenzol, Hexylnaphthalin oder Decylnaphthalin;
- gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
- Fettalkohole wie Lauryl-, Stearyl-, Oleyl-, Myristyl-, Cetylalkohol, Gemische wie Kokosfettalkohol sowie die so genannten Oxoalkohole, die man durch Hydroformylierung von α-Olefinen und weiteren Umsetzungen erhält;
- C₆-C₃₀-Fettamine, wie Decylamin, Dodecylamin, Tetradecylamin oder Hexadecylamin;
- Ester wie C₁-C₁₀-Alkylester von Fettsäuren wie Propylpalmitat, Methylstearat oder Methylpalmitat sowie bevorzugt ihre eutektischen Gemische oder Methylcinnamat;
- natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
- halogenierte Kohlenwasserstoffe wie Chlorparaffin, Bromoctadecan, Brompentadecan, Bromnonadecan, Bromeicosan, Bromdocosan.

Weiterhin sind Mischungen dieser Substanzen geeignet, solange es nicht zu einer Schmelzpunkterniedrigung außerhalb des gewünschten Bereichs kommt, oder die Schmelzwärme der Mischung für eine sinnvolle Anwendung zu gering wird.

Vorteilhaft ist beispielsweise die Verwendung von reinen n-Alkanen, n-Alkanen mit einer Reinheit von größer als 80% oder von Alkangemischen, wie sie als technisches Destillat anfallen und als solche handelsüblich sind.

Weiterhin kann es vorteilhaft sein, den lipophilen Substanzen in ihnen lösliche Verbindungen zuzugeben, um so die zum Teil bei den unpolaren Substanzen auftretende Kristallisationsverzögerung zu verhindern. Vorteilhaft verwendet man, wie in der US-A 5 456 852 beschrieben, Verbindungen mit einem 20 bis 120 K höheren Schmelzpunkt als die eigentliche Kernsubstanz. Geeignete Verbindungen sind die oben als lipophile Substanzen erwähnten Fettsäuren, Fettalkohole, Fettamide sowie aliphatischen Kohlenwasserstoffverbindungen. Sie werden in Mengen von 0,1 bis 10 Gew.-% bezogen auf den Kapselkern zugesetzt.

Die Latentwärmespeichermaterialien werden - je nach Temperaturbereich, in dem die Wärmespeicher gewünscht sind - ausgewählt. Beispielsweise verwendet man für Wärmespeicher in Baustoffen in gemäßigtem Klima bevorzugt Latentwärmespeichermaterialien, deren fest/flüssig Phasenübergang im Temperaturbereich von 0 bis 60°C liegt. So wählt man in der Regel für Innenraumanwendungen Einzelstoffe oder Mischungen mit Umwandlungstemperaturen von 15 bis 30°C.

Bevorzugte Latentwärmespeichermaterialien sind aliphatische Kohlenwasserstoffe besonders bevorzugt die oben beispielhaft aufgezählten. Insbesondere werden aliphatische Kohlenwasserstoffe mit 14 bis 20 Kohlenstoffatomen sowie deren Gemische bevorzugt.

Als Polymer für die Kapselwand können prinzipiell die für die Mikrokapseln für Durchschreibepapiere bekannten Materialien verwendet werden. So ist es beispielsweise möglich, die Latentwärmespeichermaterialien nach den in der GB-A 870476, US 2,800,457, US 3,041,289 beschriebenen Verfahren in Gelatine mit anderen Polymeren zu verkapseln.

Bevorzugte Wandmaterialien, da sehr alterungsstabil, sind duroplastische Polymere. Unter duroplastisch sind dabei Wandmaterialien zu verstehen, die aufgrund des hohen Vernetzungsgrades nicht erweichen, sondern sich bei hohen Temperaturen zersetzen. Geeignete duroplastische Wandmaterialien sind beispielsweise hochvernetzte Formaldehydharze, hochvernetzte Polyharnstoffe und hochvernetzte Polyurethane sowie hochvernetzte Methacrylsäureesterpolymere sowie unvernetzte Methacrylsäureesterpolymere.

Unter Formaldehydharzen versteht man Reaktionsprodukte aus Formaldehyd mit
- Triazinen wie Melamin
- Carbamiden wie Harnstoff
- Phenolen wie Phenol, m-Kresol und Resorcin
- Amino- und Amidoverbindungen wie Anilin, p-Toluolsulfonamid, Ethylenharnstoff und Guanidin,
oder ihren Mischungen.

Als Kapselwandmaterial bevorzugte Formaldehydharze sind Harnstoff-Formaldehydharze, Harnstoff-Resorcin-Formaldehydharze, Harnstoff-Melamin-Harze und Melamin-Formaldehydharze. Ebenso bevorzugt sind die C₁-C₄-Alkyl- insbesondere Methylether dieser Formaldehydharze sowie die Mischungen mit diesen Formaldehydharzen. Insbesondere werden Melamin-Formaldehyd-Harze und/oder deren Methylether bevorzugt.

In den von den Durchschreibepapieren her bekannten Verfahren werden die Harze als Prepolymere eingesetzt. Das Prepolymer ist noch in der wässrigen Phase löslich und wandert im Verlauf der Polykondensation an die Grenzfläche und umschließt die Öltröpfchen. Verfahren zu Mikroverkapselung mit Formaldehydharzen sind allgemein bekannt und beispielsweise in der EP-A-562 344 und EP-A-974 394 beschrieben.

Kapselwände aus Polyharnstoffen und Polyurethanen sind ebenfalls von den Durchschreibepapieren her bekannt. Die Kapselwände entstehen durch Umsetzung von NH₂-Gruppen bzw. OH-Gruppen tragenden Reaktanden mit Di- und/oder Polyisocyanaten. Geeignete Isocyanate sind beispielsweise Ethylendiisocyanat, 1,4-Tetramethylendiisocyanat, 1,6-Hexamethylendiisocyanat und 2,4- und 2,6-Toluylendiisocyanat. Ferner seien Polyisocyanate wie Derivate mit Biuretstruktur, Polyuretonimine und Isocyanurate erwähnt. Als Reaktanden kommen in Frage: Hydrazin, Guanidin und dessen Salze, Hydroxylamin, Di- und Polyamine und Aminoalkohole. Solche Grenzflächenpolyadditionsverfahren sind beispielsweise aus der US 4,021,595, EP-A 0 392 876 und EP-A 0 535 384 bekannt.
Bevorzugt werden Mikrokapseln, deren Kapselwand ein unvernetztes oder vernetztes Methacrylsäureesterpolymer ist.
Die Polymere der Kapselwand enthalten im Allgemeinen mindestens 30 Gew.-%, in bevorzugter Form mindestens 40 Gew.-%, in besonders bevorzugter Form mindestens 50 Gew.-%, insbesondere mindestens 60 Gew.-%, ganz besonders bevorzugt mindestens 70 Gew.-% sowie bis zu 100 Gew.-%, bevorzugt höchstens 90 Gew.-%, insbesondere höchstens 85 Gew.-% und ganz besonders bevorzugt höchstens 80 Gew.-% mindestens eines Monomeren aus der Gruppe umfassend C₁-C₂₄-Alkylester der Acryl- und/oder Methacrylsäure, Acrylsäure, Methacrylsäure und Maleinsäure (Monomere I), einpolymerisiert, bezogen auf das Gesamtgewicht der Monomere.
Weiterhin enthalten die Polymere der Kapselwand bevorzugt mindestens 10 Gew.-%, bevorzugt mindestens 15 Gew.-%, vorzugsweise mindestens 20 Gew.-% sowie im Allgemeinen höchstens 70 Gew.-%, vorzugsweise höchstens 60 Gew.-% und in besonders bevorzugter Form höchstens 50 Gew.-% eines oder mehrerer bi- oder polyfunktionelle Monomere, welche in Wasser nicht löslich oder schwer löslich sind (Monomere II) einpolymerisiert, bezogen auf das Gesamtgewicht der Monomere.

Daneben können die Polymere bis zu 40 Gew.-%, vorzugsweise bis zu 30 Gew.-%, insbesondere bis zu 20 Gew.-% sonstige Monomere III einpolymerisiert enthalten. Vorzugsweise ist die Kapselwand nur aus Monomeren der Gruppen I und II aufgebaut. Die Kapselwand der Mikrokapseln ist aufgebaut aus

| | |
|---|---|
| 30 bis 100 Gew.-% | eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure, |
| 0 bis 70 Gew.-% | eines oder mehrerer bi- oder polyfunktioneller Monomere (Monomere II), welche in Wasser nicht löslich oder schwer löslich ist und |
| 0 bis 40 Gew.-% | eines oder mehrerer sonstiger Monomere (Monomere III), |

jeweils bezogen auf das Gesamtgewicht der Monomere.

Als Monomere I eignen sich C₁-C₂₄-Alkylester der Acryl- und/oder Methacrylsäure sowie die ungesättigten C₃- und C₄-Carbonsäuren wie Acrylsäure, Methacrylsäure sowie Maleinsäure. Geeignete Monomere I sind iso-Propyl-, iso-Butyl-, sec.-Butyl- und tert.-Butylacrylat und die entsprechenden Methacrylate, sowie besonders bevorzugt Methyl-, Ethyl-, n-Propyl- und n-Butylacrylat und die entsprechenden Methacrylate. Generell werden die Methacrylate und Methacrylsäure bevorzugt.

Nach einer bevorzugten Ausführungsform enthalten die Mikrokapselwände 25 Gew.-% bis 75 Gew.-% Maleinsäure, Methacrylsäure und/oder Acrylsäure insbesondere Methacrylsäure bezogen auf die Gesamtmenge der Monomere I, einpolymerisiert.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Betracht. Sie bewirken eine Vernetzung der Kapselwand während der Polymerisation. Es können ein oder mehrere Divinylmonomere sowie ein oder mehrere Polyvinylmonomere sowie Divinylmonomere in Mischung mit Polyvinylmonomeren einpolymerisiert werden.

Gemäß einer bevorzugten Ausführungsform wird als Monomer II eine Mischung aus Divinyl- und Polyvinylmonomeren eingesetzt, wobei der Anteil der Polyvinylmonomeren 2 bis 90 Gew.-% bezogen auf die Summe aus Divinyl- und Polyvinylmonomeren beträgt. Bevorzugt beträgt der Anteil der Polyvinylmonomeren 5 bis 80 Gew.-%, vorzugsweise 10 bis 60 Gew.-%, bezogen auf die Summe aus Divinyl- und Polyvinylmonomeren.

Geeignete Divinylmonomere sind Divinylbenzol und Divinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole, Trivinylbenzol und Trivinylcyclohexan. Besonders bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Bevorzugt werden die Kombinationen aus Divinyl- und Polyvinylmonomeren wie aus Butandioldiacrylat und Pentaeritrittetraacrylat, Hexandioldiacrylat und Pentaeritrittetraacrylat, Butandioldiacrylat und Trimethylolpropantriacrylat sowie Hexandioldiacrylat und Trimethylolpropantriacrylat.

Als Monomere III kommen sonstige Monomere, die von den Monomeren I und II verschieden sind, wie Vinylacetat, Vinylpropionat, Vinylpyridin und Styrol oder α-Methylstyrol in Betracht. Besonders bevorzugt werden Itaconsäure, Vinylphosphonsäure, Maleinsäureanhydrid, 2-Hydroxyethylacrylat und -methacrylat, Acrylamido-2-methylpropansulfonsäure, Methacrylnitril, Acrylnitril, Methacrylamid, N-Vinylpyrrolidon, N-Methylolacrylamid, N-Methylolmethacrylamid, Dimethylaminoethylmethacrylat und Diethylaminoethylmethacrylat.

Das Herstellverfahren der Mikrokapseln ist eine so genannte in-situ-Polymerisation. Das Prinzip der Mikrokapselbildung basiert darauf, dass man aus den Monomeren, einem Radikalstarter, dem Schutzkolloid und der einzukapselnden lipophilen Substanz eine stabile Öl-in-Wasser-Emulsion herstellt. Anschließend löst man die Polymerisation der Monomeren durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A-101 39 171 beschrieben, auf deren Inhalt ausdrücklich Bezug genommen wird.

Die Ausgangsemulsion wird mithilfe eines Schutzkolloids stabilisiert.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose. Diese Schutzkolloide sind in der WO 2008/046839 beschrieben, auf deren Inhalt ausdrücklich Bezug genommen wird.

Organische anionische Schutzkolloide sind Natriumalginat, Polymethacrylsäure und ihre Copolymerisate, Polyacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide, sind sogenannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind. Die Wirkweise und ihr Einsatz ist in der EP-A-1 029 018 sowie der EP-A-1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser gegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Gemäß einer Ausführungsform werden anorganische Schutzkolloide sowie ihre Mischungen mit organischen Schutzkolloiden bevorzugt.

Gemäß einer weiteren Ausführungsform werden organisch neutrale Schutzkolloide bevorzugt.

Bevorzugt werden OH-Gruppen tragende Schutzkolloide wie Polyvinylalkohole und partiell hydrolysierte Polyvinylacetate.

Ferner ist es möglich zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich Bezug genommen wird. Die Tenside können in einer Menge von 0,01 bis 10 Gew.-% bezogen auf die Wasserphase der Emulsion eingesetzt werden.

Die Herstellung der bevorzugten Mikrokapseln auf Polymethacrylatbasis sowie die dazu geeigneten Hilfsmittel wie Radikalstarter, gegebenenfalls Regler, ist bekannt und wird beispielsweise in der EP-A-1 029 018, DE 10 163 162 und WO 2008/071649 beschrieben, auf deren Offenbarung ausdrücklich Bezug genommen wird. So werden insbesondere die hierin als Radikalstarter für die radikalisch ablaufende Polymerisationsreaktion genannten Peroxo- und Azoverbindungen, zweckmäßigerweise in Mengen von 0,2 bis 5 Gew.-%, bezogen auf das Gewicht der Monomere, eingesetzt.

Es ist möglich die Mikrokapseln mit Polyelektrolyt zu behandeln, was gegebenenfalls die Dichtigkeit der Kapseln noch verbessern kann. Verfahren zu ihrer Herstellung sowie geeignete Polyelektrolyte sind in der WO 2008/006762 und WO 2008/046839 beschrieben, auf die ausdrücklich verwiesen wird.

### Die Polyurethanhartschaumschicht

Die für Verbundelemente aus Polyurethan-Hartschaumstoff eingesetzten Hartschaumstoffe sind seit langem bekannt und vielfach in der Literatur beschrieben. Sofern nachfolgend von einem reaktiven Hartschaumsystem die Rede ist, so ist darunter die Mischung der Ausgangskomponenten zu verstehen.

Unter Polyurethanhartschaum ist eine Polymerschicht zu verstehen mit einer mittleren Dichte von 20 bis 150, bevorzugt von 25 bis 100, besonders bevorzugt von 30 bis 70 kg/m³.

Im Rahmen der Erfindung wird unter Polyurethan-Hartschaumstoff bevorzugt ein Schaumstoff gemäß DIN 7726 verstanden, d.h. der Schaumstoff weist eine Druckspannung bei 10 % Stauchung bzw. Druckfestigkeit nach DIN 53 421 / DIN EN ISO 604 von größer gleich 80 kPa, bevorzugt größer gleich 150 kPa. Weiterhin verfügt der Polyurethan-Hartschaumstoff nach DIN ISO 4590 über eine Geschlossenzelligkeit von größer 85%, bevorzugt größer 90%.

Unter dem Isocyanatindex wird im Rahmen der vorliegenden Erfindung das stöchiometrische Verhältnis an Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst. Die Isocyanate und die Verbindungen mit Isocyanaten reaktiven Wasserstoffatomen werden in solchen Mengen mit einander zur Umsetzung gebracht, dass der Isocyanatindex in einem Bereich von 100 bis 700 liegt, bevorzugt von 115 bis 180. In einer weiteren bevorzugten Ausführung wird mit einem Isocyanatindex von 180 bis 700, insbesondere von 200 bis 500 gearbeitet. Hierbei spricht man dann von sogenannten Polyisocyanurat-modifizierten Polyurethanschäumen oder Polyisocyanuratschäumen.

Ihre Herstellung erfolgt üblicherweise durch Umsetzung von organischen Di- und/oder Polyisocyanaten a) mit Verbindungen mit mindestens zwei mit Isocyanatgruppen reaktiven Wasserstoffatomen b), bevorzugt Polyolen.

Als organische Di- und Polyisocyanate a) kommen die obengenannten, vorzugsweise aromatischen mehrwertigen Isocyanate sowie die modifizierten mehrwertigen Isocyanate in Betracht. Daneben können auch Umsetzungsprodukte von mehrwertigen Isocyanaten mit mehrwertigen Polyolen, sogenannte Prepolymere, sowie deren Mischungen mit anderen Di- und Polyisocyanaten Verwendung finden.

Besonders bewährt hat sich als organisches Polyisocyanat Roh-MDI mit einem NCO-Gehalt von 29 bis 33 Gew.-% und einer Viskosität bei 25°C im Bereich von 100 bis 2000 mPa·s, insbesondere im Bereich von 100 bis 800 mPa·s.

Als Verbindungen mit mindestens zwei gegenüber Isocyanat reaktiven Wasserstoffatomen b) kommen im allgemeinen solche in Frage, die mindestens zwei reaktive Gruppen, ausgewählt aus OH-, SH-, NH-, NH₂-Gruppen und CH-acide Gruppen im Molekül tragen, insbesondere Polyetherpolyole und/oder die obengenannten Polyesterpolyole mit OH- Zahlen im Bereich von 50 bis 800 mg KOH/g zum Einsatz.

Die eingesetzten Polyesterpolyole haben zumeist eine Funktionalität von 1,5 - 4 sowie eine OH-Zahl von 50 - 400, vorzugsweise 150 - 300 mg KOH/g.

Die Polyetherpolyole werden nach bekannten Verfahren, beispielsweise durch anionische Polymerisation von Alkylenoxiden in Gegenwart von Katalysatoren, beispielsweise Alkalihydroxiden, hergestellt.

Als Alkylenoxide werden zumeist Ethylenoxid und/oder Propylenoxid, vorzugsweise reines 1,2- Propylenoxid eingesetzt.

Als Startmoleküle kommen insbesondere Verbindungen mit mindestens 2, vorzugsweise 3 bis 8 Hydroxylgruppen oder mit mindestens zwei primären Aminogruppen im Molekül zum Einsatz.

Als Startmoleküle mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie oligomere Kondensationsprodukte aus Phenol und Formaldehyd und Mannich- Kondensate aus Phenolen, Formaldehyd und Dialkanolaminen sowie Melamin eingesetzt.

Als Startmoleküle mit mindestens zwei primären Aminogruppen im Molekül werden vorzugsweise aromatische Di- und/oder Polyamine, beispielsweise Phenylendiamine, 2,3-, 2,4-, 3,4- und 2,6- Toluylendiamin und 4,4'- , 2,4'- und 2,2'- Diamino- diphenylmethan sowie aliphatische Di- und Polyamine, wie Ethylendiamin, eingesetzt.

Die Polyetherpolyole besitzen eine Funktionalität von vorzugsweise 2 bis 8 und Hydroxylzahlen von vorzugsweise 50 mg KOH/g bis 800 mg KOH/g und insbesondere 150 mg KOH/g bis 570 mg KOH/g.

Zu den Verbindungen mit mindestens zwei gegenüber Isocyanat reaktiven Wasserstoffatomen b) gehören auch die gegebenenfalls mit verwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel werden vorzugsweise Alkanolamine, Diole und/oder Triole, insbesondere Diole und/oder Triole mit Molekulargewichten kleiner als 400, vorzugsweise 60 bis 300 verwendet.

Kettenverlängerungsmittel, Vernetzungsmittel oder Mischungen davon werden zweckmäßigerweise in einer Menge von 1 bis 20 Gew.- %, vorzugsweise 2 bis 5 Gew.- %, bezogen auf die Polyolkomponente b), eingesetzt.

Weitere Angaben zu den verwendeten Polyetherpolyolen und Polyesterpolyolen sowie ihrer Herstellung finden sich beispielsweise im Kunststoffhandbuch, Band 7 "Polyurethane", herausgegeben von Günter Oertel, Carl- Hanser- Verlag München, 3. Auflage, 1993.

Die Polyurethanhartschaumstoffe werden üblicherweise in Anwesenheit von Treibmitteln, den obengenannten Katalysatoren und Zellstabilisatoren sowie, falls erforderlich weiteren Hilfs- und/oder Zusatzstoffen hergestellt, die allgemein in der Polyurethanchemie bekannt sind und in der DE-A-101 24 333 beschrieben werden, auf die ausdrücklich verwiesen wird. Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Flammschutzmittel, Hydrolyseschutzmittel, Antistatika, fungistatisch und bakteriostatisch wirkende Mittel zum Einsatz. Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl- Hanser- Verlag München, 1. Auflage, 1966, 2. Auflage, 1983 und 3. Auflage, 1993.

Als Treibmittel können die für die Polyurethanchemie üblichen chemische und/oder physikalische Treibmittel verwendet werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe wie Pentan, Cyclopentan, isoPentan sowie Mischungen der Isomeren, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale.

Die Treibmittelkomponente wird üblicherweise in einer Menge von 1 bis 30 Gew.-%, bevorzugt 2 bis 20 Gew.-%, und besonders bevorzugt 3 bis 12 Gew.-%, bezogen auf das Gesamtgewicht der Polyolkomponente b), eingesetzt, und richtet sich nach der gewünschten Zieldichte des Polyurethanhartschaumstoffes.

Ferner können die für die Polyurethanchemie üblichen obengenannten Flammschutzmittel zum Einsatz kommen.

Für die Polyisocyanurathartschaumstoffe werden üblicherweise zusätzlich Katalysatoren und Katalysatorgemische eingesetzt, die die Trimerisierungsreaktion der NCO-Gruppen untereinander katalysieren. Beispielhaft seien Metallsalze, speziell Ammonium-, Alkali- oder Erdalkalimetallsalze von Carbonsäuren genannt. Vorzugsweise werden dabei die Salze von linearen oder verzweigten, substituierten oder unsubstituierten, gesättigten oder ungesättigten Carbonsäuren mit 1 bis 20 Kohlenstoffatomen, wie zum Beispiel Ameisensäure, Essigsäure, Oktansäure, Weinsäure, Citronensäure, Ölsäure, Stearinsäure oder Rizinolsäure oder substituierte oder unsubstituierte, aromatische Carbonsäuren mit 6 bis 20 Kohlenstoffen, wie Benzoesäure oder Salicylsäure verwendet. Besonders bevorzugt sind Kaliumformiat, Kaliumacetat, Kaliumoktoat (Kalium 2-ethylhexanoat), Ammoniumformiat, Ammoniumacetat und Ammoniumoktoat, insbesondere Kaliumformiat und Kaliumacetat.

Die Polyurethan- Hartschaumstoffe können diskontinuierlich oder kontinuierlich mit Hilfe bekannter Mischvorrichtungen hergestellt werden. Der Polyolkomponente können zuvor mit separaten Pumpen Katalysatoren und /oder Treibmittel zudosiert werden. In der Regel werden alle Reaktionskomponenten gleichzeitig, üblicherweise in einem Mischkopf, gemischt. Die Ausgangskomponenten werden zumeist bei einer Temperatur von 15 bis 35°C, vorzugsweise von 20 bis 30°C gemischt.

### Das Bauelement

Die erfindungsgemäßen Bauelemente haben bevorzugt einen Aufbau A-B-C-A' oder AB-C-B-A. Die das Latentwärmespeichermaterial enthaltenden Mikrokapseln sind erfindungsgemäß in der Polyurethankompaktschicht B enthalten.

Die Mikrokapseln werden mittels des reaktiven Polyurethankompaktsystems auf die metallische Deckschicht aufgebracht. Diese Aufbringung kann in einem isolierten Verfahrensschritt erfolgen oder direkt bei der Herstellung des flächenförmigen Bauelementes.

Erfindungsgemäß werden Mikrokapseln in einer oder mehreren der Ausgangskomponenten des reaktiven Polyurethankompaktsystems dispergiert. Dabei können die Mikrokapseln direkt vor dem Vermischen der Ausgangskomponenten und dem Auftragen auf eine Deckschicht suspendiert werden oder vorrätig suspendiert in einer oder mehreren Ausgangskomponenten gelagert werden.

Gemäß einer bevorzugten Ausführungsform werden die Mikrokapseln in der Verbindung mit mindestens zwei mit Isocyanatgruppen reaktiven Wasserstoffatomen b), bevorzugt der Polyolkomponente, dispergiert. Vorzugsweise weist die Polyolkomponente (ohne Mikrokapselzusatz) eine Viskosität von 100 - 2000 mPa.s, bevorzugt 150 - 800 mPa.s bei 25 °C auf.

In einer weiteren erfindungsgemäßen Ausführung kann als Hilfsstoff ein Dispergiermittel zur Polyolkomponente gegeben werden. Als Dispergiermittel seien beispielhaft im Handel erhältliche Dispergiermittel wie die BYK-W Additivserie von BYK-Chemie GmbH genannt. Damit kann das Fließverhalten der das Speichermaterial enthaltenen Komponente und des reaktiven Polyurethankompaktsystems verbessert werden und damit die Verarbeitung erleichtert werden.

Die Menge an Mikrokapseln kann frei gewählt werden und bestimmt sich durch die gewünschte Menge an Mikrokapseln pro Fläche des flächenförmigen Bauelements. In der Regel bestimmt sich diese durch die gewünschte Dicke der reaktiven Polyurethankompaktsystemschicht im Bauelement und durch die gewünschte maximale Verarbeitungsviskosität der Ausgangskomponenten für das reaktive Polyurethankompaktsystem.

Vorzugsweise werden 20 bis 3000 g, bevorzugt 100 bis 2000 g, insbesondere 500 bis 1500 g Mikrokapseln pro m² flächenförmiges Bauelement aufgebracht.

Gemäß einer bevorzugten Ausführungsform werden 5 bis 30 Gew.-% Mikrokapseln bezogen auf die Mischung aus reaktiven Polyurethankompaktsystem und Mikrokapseln eingesetzt.

Die Polyurethankompaktschicht hat in der Regel eine Dicke von 0,1 bis 3 cm, bevorzugt 0,25 bis 2,5 cm, besonders bevorzugt 0,5 bis 2 cm, insbesondere 0,5 bis 1,5 cm.

Das Bauelement kann sowohl diskontinuierlich wie auch kontinuierlich hergestellt werden. Das Reaktionsgemisch kann mit Hoch- oder Niederdruckdosiermaschinen auch in geschlossene Stützwerkzeuge (z.B. Pressenformen) gegossen werden. Nach dieser Technologie werden beispielsweise diskontinuierlich erfindungsgemäße Verbundelemente gefertigt.

Gemäß einer bevorzugten Ausführungsform werden die Bauelemente diskontinuierlich beispielsweise in einer Pressform hergestellt.

Gemäß einer weiteren bevorzugten Ausführungsform, werden die Bauelemente kontinuierlich hergestellt z.B. in einer Doppelbandanlage. Dabei werden die obere und die untere metallische Deckschicht von einer Rolle abgecoilt und gegebenenfalls profiliert, erwärmt und vorbehandelt, z.B. Corona-behandelt, um die Beschäumbarkeit der Deckschichten zu verbessern. Danach werden die unterschiedlichen Reaktionsgemische, jeweils gemischt, beispielsweise in einem Hochdruckmischkopf, nacheinander auf die untere Deckschicht aufgetragen und zwischen oberer und unterer Deckschicht im sogenannten Doppelband ausgehärtet. Nach dem Verlassen des Doppelbandes wird der endlose Strang in den gewünschten Abmessungen zugeschnitten.

Die vorliegende Erfindung betrifft auch ein Verfahren zur Herstellung von flächenförmigen Bauelementen umfassend das Aufbringen einer Polyurethankompaktschicht (B) und einer Polyurethanhartschaumschicht (C) auf eine metallische Deckschicht und abschließend dem Aufbringen einer zweiten Metalldeckschicht und gegebenenfalls einer zusätzlichen Polyurethankompaktschicht zwischen den benachbarten Schichten (A) und (C).

Ferner ist es möglich, zur Erzielung einer besseren Haftung zwischen den Schichten (A) und (C), also bei dem Schichtaufbau (A)-(B)-(C)-(A), einen herkömmlichen Haftvermittler einzusetzen. Derartige Haftvermittler entsprechen chemisch dem Polyurethankompaktsystem, mit dem Unterschied, dass sie keine Mikrokapseln enthalten.

Gemäß einer bevorzugten Variante wird das Mikrokapseln enthaltende reaktive Polyurethankompaktsystem auf eine untere metallische Deckschicht aufgetragen, härtet dort aus, dann folgt der Auftrag des reaktiven Polyurethanhartschaumsystems, welches dann aufschäumt und aushärtet, gegebenenfalls eine weitere Schicht des Mikrokapseln enthaltenden reaktiven Polyurethankompaktsystems aufgebracht und schließlich wird die obere Metalldeckschicht aufgebracht.

Gemäß einer ebenfalls bevorzugten Herstellungsvariante wird das reaktive Polyurethanhartschaumsystem auf die metallische Deckschicht aufgetragen, schäumt dort auf und härtet aus, dann folgt der Auftrag des reaktiven Polyurethankompaktsystems, enthaltend die Mikrokapseln, und schließlich wird die obere Deckschicht aufgebracht.

In einer besonderen Ausführungsform des erfindungsgemäßen Verfahrens wird der zeitliche Abstand zwischen Aufbringen des reaktiven Hartschaumsystems auf das Polyurethankompaktsystem bzw. dem Aufbringen des reaktiven Polyurethankompaktsystems auf das Hartschaumsystem so gewählt, dass das Polyurethankompaktsystem bzw. das Hartschaumsystem noch nicht vollständig ausgehärtet ist, um die Haftung zwischen beiden Systemen zu verbessern.

Der oben beschriebene Herstellungsprozess ist eine bevorzugte Ausführung des Herstellungsverfahrens. Andere Herstellungsverfahren, die Stand der Technik sind und dem Fachmann bekannt sind, können genauso verwendet werden.

Auf diese Weise können die erfindungsgemäßen Bauelemente, sogenannte Sandwichelemente, auch mit unterschiedlichen metallische Deckschicht hergestellt werden. Sie verfügen dann über eine oder zwei thermisch speicherfähige, oberflächennahe Schichten direkt hinter der/den Metalldeckschicht(en).

Die Dicke der erfindungsgemäßen Bauelemente liegt üblicherweise zwischen 20 und 300 mm, der übliche Dichtebereich des Polyurethan-Hartschaumstoffes zur Herstellung dieser Formkörper ist 20 bis 150 kg/m³, vorzugsweise 25 bis 100 kg/m³ (Kunststoffhandbuch, 3. Auflage, Seite 150).

Die erfindungsgemäßen Bauelemente ermöglichen die Vermeidung von Barackenklima. Die mit ihnen hergestellten Gebäude zeigen neben guter Wärmedämmung eine deutliche Verbesserung des Temperaturverlaufs und damit des Energieverbrauches. Bevorzugt werden die Bauelemente im Wohnungsbau, Industriebau, Kühlhausbau, in Sektionaltoren, in Bürocontainern oder im Wohnwagenbau eingesetzt.

### Beispiel 1

### Polyolkomponente des Kompaktsystems

44 Gewichtsteile Polyetherol 1, mit einer Funktionalität von 3 und einer Hydroxyzahl von 40 mg KOH/g
36 Gewichtsteile Polyetherol 2, mit einer Funktionalität von 3 und einer Hydroxyzahl von 410 mg KOH/g
20 Gewichtsteile Polyetherol 3, mit einer Funktionalität von 2 und einer Hydroxyzahl von 104 mg KOH/g
1 Gewichtsteil Lösung eines aminhaltigen PUR-Katalysators

### Polyolkomponente des Hartschaumsystems

15 Gewichtsteile Flammschutzmittel Tris(2-chlorisopropyl)phosphat
58 Gewichtsteile Polyetherol 4, mit einer Funktionalität von 4,3 und einer Hydroxyzahl von 490 mg KOH/g
15 Gewichtsteile Polyetherol 2
10 Gewichtsteile Polyetherol 3
2 Gewichtsteile silikonhaltiger Schaumstabilisator
1,5 Gewichtsteile aminhaltiger PUR-Katalysator
0,5 Gewichtsteile aminhaltiger Treibkatalysator
8 Gewichtsteile 1,1,1,3,3-Pentafluorpropan
3 Gewichtsteile Ameisensäure 85%

Das flächenförmige Bauelement aus Verbundmaterial wurde mit Hilfe einer kubischen, auf 45 °C temperierten und verschließbaren Form mit den Innenausmaßen 20 x 20 x 8 cm (B x L x H) hergestellt. Ein 20 x 20 cm großes Blech wurde auf den Boden der Form gelegt. Der verschließbare Deckel der Form war leicht magnetisch, so dass ein weiteres metallisches, 20 x 20 cm großes Blech dort arretiert werden konnte. Die Seitenwände der Form wurden mit einem silikonhaltigen Trennmittel behandelt, um das Entformen des Bauelements später zu erleichtern.

40 g Mikrokapseln (hergestellt gemäß Beispiel 1 der WO 2008/006762 mit einem Wandpolymer aus 20 Gew.-Teilen Methacrylsäure, 40 Gew.-Teilen Methylmethacrylat und 40 Gew.-Teilen Butandiolacrylat jedoch mit Hexadecan als Latentwärmespeichermaterial) wurden in 60 g der Polyolkomponente des Kompaktsystems dispergiert (40 gew.-%ige Dispersion). Anschließend wurde die Dispersion mit 50 g Lupranat M 50 (polymeres MDI (NCO-Gehalt 31,5 Gew-%) der BASF SE) vermischt.

Diese Mischung wurde als eine 1 cm dicke Schicht auf ein 20 x 20 cm großes, in der Form liegendes Blech aufgetragen. Nach 2 Minuten wurde ein Gemisch aus 85 g Polyolkomponente des Hartschaumsystems und 85 g Lupranat M 50 auf das ausreagierende, Mikrokapseln enthaltende Kompaktsystem aufgetragen und die Form anschließend geschlossen. Nach 8 Minuten wurde die Form wieder geöffnet und ein Bauelement erhalten aufgebaut aus von unten nach oben: einer unteren metallischen Deckschicht, einer Polyurethankompaktschicht, enthaltend Mikrokapseln, einer Polyurethanhartschaumschicht und einer oberen metallischen Deckschicht.

### Vergleichsbeispiel (nicht erfindungsgemäß)

Es wurde ein baugleiches Element hergestellt, welches lediglich in der Polyurethankompaktschicht keine PCM-Mikrokapseln enthielt. Somit wurden 80 g der Polyolkomponente des Kompaktsystems (ohne Mikrokapseln) mit 70 g Lupranat M 50 vermischt und auf das Blech aufgetragen.

Die beiden Bauelemente zeigten die gleiche Wärmeleitfähigkeit, jedoch wurde bei dem erfindungsgemäßen Bauelement bis zur Erreichung eines konstanten Wärmestroms eine deutlich höhere Wärmemenge absorbiert.

## Patentansprüche

1. Flächenförmiges Bauelement aus Verbundmaterial, umfassend zwei metallische Deckschichten, eine Polyurethanhartschaumschicht und eine Polyurethankompaktschicht. die Mikrokapseln mit einem Kapselkern aus Latentwärmespeichermaterial enthält, wobei die Kapselwand der Mikrokapseln aufgebaut ist aus
| | |
|---|---|
| 30 bis 100 Gew.-% | eines oder mehrerer Monomere (Monomere I) aus der Gruppe umfassend C₁-C₂₄-Alkylester der Acryl- und/oder Methacrylsäure, Acrylsäure, Methacrylsäure und Maleinsäure, |
| 0 bis 70 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |
jeweils bezogen auf das Gesamtgewicht der Monomere.

2. Flächenförmiges Bauelement nach Anspruch 1, **dadurch gekennzeichnet, dass** das Element die folgende Reihenfolge der Schichten aufweist:
1. metallische Deckschicht (A),
2. Polyurethankompaktschicht (B),
3. Polyurethanhartschaumschicht (C) und
4. eine metallische Deckschicht (A').

3. Flächenförmiges Bauelement nach Anspruch 1 oder 2, **dadurch gekennzeichnet, dass** die Polyurethankompaktschicht eine Dichte von 400 bis 1200 kg/m³ hat.

4. Flächenförmiges Bauelement nach einem der Ansprüche 1 bis 3, **dadurch gekennzeichnet, dass** die Polyurethankompaktschicht aus organischen Di- und/oder Polyisocyanaten, Polyetherpolyolen und/oder Polyesterpolyolen sowie einem oder mehreren Katalysatoren und gegebenenfalls Hilfsstoffen gebildet wird.

5. Flächenförmiges Bauelement nach einem der Ansprüche 1 bis 4, **dadurch gekennzeichnet, dass** das Latentwärmespeichermaterial eine organische lipophile Substanz mit einem fest/flüssig Phasenübergang im Temperaturbereich von -20 bis 120°C ist.

6. Flächenförmiges Bauelement nach einem der Ansprüche 1 bis 5, **dadurch gekennzeichnet, dass** die Polyurethanhartschaumschicht eine mittlere Dichte von 20 bis 150 kg/m³ hat.

7. Flächenförmiges Bauelement nach einem der Ansprüche 1 bis 6, **dadurch gekennzeichnet, dass** die Polyurethanhartschaumschicht aus organischen Di- und/oder Polyisocyanaten, Polyetherpolyolen und/oder Polyesterpolyolen, eines Treibmittels und einem oder mehreren Katalysatoren sowie gegebenenfalls weiteren Hilfsstoffen gebildet wird.

8. Verfahren zur Herstellung eines flächenförmigen Bauelements nach einem der Ansprüche 1 bis 7, umfassend das Aufbringen einer Polyurethankompaktschicht (B) und einer Polyurethanhartschaumschicht (C) auf eine Metalldeckschicht und abschließend dem Aufbringen einer zweiten Metalldeckschicht und gegebenenfalls einer zusätzlichen Polyurethankompaktschicht zwischen den benachbarten Schichten (A) und (C).

9. Verfahren zur Herstellung eines flächenförmigen Bauelements nach Anspruch 8, indem man es in einem kontinuierlichen Prozess herstellt.

10. Verwendung des flächenförmigen Bauelements gemäß den Ansprüchen 1 bis 7 im Wohnungsbau, Industriebau, Kühlhausbau, in Sektionaltoren, in Bürocontainem oder im Wohnwagenbau.

## Claims

1. Sheet-like construction element composed of composite material, comprising two metallic outer layers, a rigid polyurethane foam layer, and a compact polyurethane layer which comprises microcapsules with a capsule core composed of latent-heat-accumulator material, where the capsule wall of the microcapsules is composed of
| | |
|---|---|
| from 30 to 100% | by weight of one or more monomers (monomers I) from the group comprising C₁-C₂₄-alkyl esters of acrylic and/or methacrylic acid, acrylic acid, methacrylic acid, and maleic acid, |
| from 0 to 70% | by weight of one or more bi- or polyfunctional monomers (monomers II) which have no or little solubility in water, and |
| from 0 to 40% | by weight of one or more other monomers (monomers III), |
based in each case on the total weight of the monomers.

2. Sheet-like construction element according to Claim 1, **characterized in that** the element has the following sequence of the layers:
1. metallic outer layer (A),
2. compact polyurethane layer (B),
3. rigid polyurethane foam layer (C), and
4. a metallic outer layer (A').

3. Sheet-like construction element according to Claim 1 or 2, **characterized in that** the density of the compact polyurethane layer is from 400 to 1200 kg/m³.

4. Sheet-like construction element according to any of Claims 1 to 3, **characterized in that** the compact polyurethane layer is formed from organic di- and/or polyisocyanates, from polyether polyols, and/or from polyester polyols, or else from one or more catalysts and optionally auxiliaries.

5. Sheet-like construction element according to any of Claims 1 to 4, **characterized in that** the latent-heat-accumulator material is an organic lipophilic substance with a solid/liquid phase transition in the temperature range from -20 to 120° C.

6. Sheet-like construction element according to any of Claims 1 to 5, **characterized in that** the average density of the rigid polyurethane foam layer is from 20 to 150 kg/m³.

7. Sheet-like construction element according to any of Claims 1 to 6, **characterized in that** the rigid polyurethane foam layer is formed from organic di- and/or polyisocyanates, from polyether polyols, and/or from polyester polyols, from a blowing agent, and from one or more catalysts, and also optionally from further auxiliaries.

8. Process for the production of a sheet-like construction element according to any of Claims 1 to 7, comprising the application of a compact polyurethane layer (B) and of a rigid polyurethane foam layer (C) to a metal outer layer and finally the application of a second metal outer layer and optionally of an additional compact polyurethane layer between the adjacent layers (A) and (C).

9. Process for the production of a sheet-like construction element, according to Claim 8, in a continuous process.

10. Use of the sheet-like construction element according to Claims 1 to 7 in domestic construction, industrial construction, or in cold-store construction, in sectional doors, in portable office accommodation, or in residential-trailer construction.

## Revendications

1. Élément de construction de forme plate en un matériau composite, comprenant deux couches supérieures métalliques, une couche de mousse dure de polyuréthane et une couche compacte de polyuréthane, qui contient des microcapsules ayant un noyau de capsule en un matériau accumulateur de chaleur latent, la paroi de capsule des microcapsules étant constituée par
30 à 100 % en poids d'un ou de plusieurs monomères (monomères I) du groupe comprenant les esters alkyliques en C₁-C₂₄ de l'acide acrylique et/ou méthacrylique, l'acide acrylique, l'acide méthacrylique et l'acide maléique,
0 à 70 % en poids d'un ou de plusieurs monomères bi- ou polyfonctionnels (monomères II), qui ne sont pas solubles ou difficilement solubles dans l'eau, et
0 à 40 % en poids d'un ou de plusieurs autres monomères (monomères III),
à chaque fois par rapport au poids total des monomères.

2. Élément de construction de forme plate selon la revendication 1, **caractérisé en ce que** l'élément présente la succession de couches suivante :
1. une couche supérieure métallique (A),
2. une couche compacte de polyuréthane (B),
3. une couche de mousse dure de polyuréthane (C), et
4. une couche supérieure métallique (A').

3. Élément de construction de forme plate selon la revendication 1 ou 2, **caractérisé en ce que** la couche compacte de polyuréthane a une densité de 400 à 1 200 kg/m³.

4. Élément de construction de forme plate selon l'une quelconque des revendications 1 à 3, **caractérisé en ce que** la couche compacte de polyuréthane est formée par des di- et/ou polyisocyanates organiques, des polyéther-polyols et/ou des polyester-polyols, ainsi qu'un ou plusieurs catalyseurs et éventuellement des adjuvants.

5. Élément de construction de forme plate selon l'une quelconque des revendications 1 à 4, **caractérisé en ce que** le matériau accumulateur de chaleur latent est une substance lipophile organique ayant une transition de phase solide/liquide dans la plage de température allant de -20 à 120 °C.

6. Élément de construction de forme plate selon l'une quelconque des revendications 1 à 5, **caractérisé en ce que** la couche de mousse dure de polyuréthane a une densité moyenne de 20 à 150 kg/m³.

7. Élément de construction de forme plate selon l'une quelconque des revendications 1 à 6, **caractérisé en ce que** la couche de mousse dure de polyuréthane est formée par des di- et/ou polyisocyanates organiques, des polyéther-polyols et/ou des polyester-polyols, un agent gonflant et un ou plusieurs catalyseurs, ainsi qu'éventuellement d'autres adjuvants.

8. Procédé de fabrication d'un élément de construction de forme plate selon l'une quelconque des revendications 1 à 7, comprenant l'application d'une couche compacte de polyuréthane (B) et d'une couche de mousse dure de polyuréthane (C) sur une couche supérieure métallique, puis l'application d'une deuxième couche supérieure métallique et éventuellement d'une couche compacte de polyuréthane supplémentaire entre les couches (A) et (C) voisines.

9. Procédé de fabrication d'un élément de construction de forme plate selon la revendication 8, selon lequel il est fabriqué par un procédé continu.

10. Utilisation de l'élément de construction de forme plate selon les revendications 1 à 7 dans la construction d'habitations, dans la construction de bâtiments industriels, dans la construction d'entrepôts frigorifiques, dans des portes sectionnables, dans des bureaux préfabriqués ou dans la construction de caravanes.
